(19) **Europäisches Patentamt / European Patent Office / Office européen des brevets**

(11) **EP 4 530 664 A1**

(12) **EUROPEAN PATENT APPLICATION**

(43) Date of publication:
02.04.2025 Bulletin 2025/14

(21) Application number: 23199947.5

(22) Date of filing: 27.09.2023

(51) International Patent Classification (IPC):
G01S 7/41 (2006.01)    G01S 13/28 (2006.01)
G01S 13/42 (2006.01)   G01S 13/56 (2006.01)
G01S 13/58 (2006.01)   G01S 7/28 (2006.01)
G01S 13/34 (2006.01)   G01S 13/931 (2020.01)

(52) Cooperative Patent Classification (CPC):
**G01S 13/286; G01S 7/415; G01S 13/42;**
**G01S 13/56; G01S 13/582;** G01S 7/023;
G01S 7/2813; G01S 7/417; G01S 13/343;
G01S 13/424; G01S 13/584; G01S 2013/93272;
G01S 2013/93275

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Infineon Technologies AG**
**85579 Neubiberg (DE)**

(72) Inventors:
• WILL, Christoph Jürgen
  81673 Munich (DE)
• CHAKRABORTY, Abhiram
  82008 Unterhaching (DE)

(74) Representative: **2SPL Patentanwälte PartG mbB**
**Landaubogen 3**
**81373 München (DE)**

(54) **APPARATUS, RADAR SYSTEM AND METHOD**

(57)    Provided is an apparatus comprising processing circuitry configured to determine, based on radar data, whether a moving object is present in a field of view (FoV) of a radar sensor. The processing circuitry is further configured to determine, based on the radar data, a range of the moving object if it is determined that the moving object is present in the FoV. The processing circuitry is further configured to activate a radar target function based on the range of the moving object. The radar target function is a function configured to control an operation of a device based on the radar data.

Fig. 1

EP 4 530 664 A1

## Description

### Field

The present disclosure relates to radar sensors. In particular, examples relate to an apparatus, a radar system, and a (e.g., computer-implemented) method.

### Background

Radar systems are essential for detecting and tracking objects. When operating a radar system, there is an interplay between power consumption and accuracy. Increasing power consumption can improve the radar's ability to accurately detect and track targets, as it may enable stronger signal transmissions, higher frame and heightened receiver sensitivity, and more advanced signal processing or the like. However, it also leads to higher operational costs and heat generation. Further, false detections, may occur when the radar system mistakenly identifies a non-existent target or interprets noise as a valid signal, and can undermine the system's accuracy. Reducing false detections may involve further increasing power consumption for even stronger signals or implementing more sophisticated signal processing techniques, both of which can impact the overall balance between power usage and accuracy. Hence, there may be a demand for improved control of a radar sensor.

### Summary

The demand is satisfied by the subject matter of the independent claims. Further beneficial embodiments are given by the dependent claims.

A first aspect of the present disclosure relates to an apparatus comprising processing circuitry configured to determine, based on radar data, whether a moving object is present in a field of view (FoV) of a radar sensor. The processing circuitry is configured to determine, based on the radar data, a range of the moving object if it is determined that the moving object is present in the FoV. The processing circuitry is configured to activate a radar target function based on the range of the moving object. The radar target function is a function configured to control an operation of a device based on the radar data.

A second aspect of the present disclosure relate to a radar system comprising the above apparatus and a radar sensor. The radar sensor is configured to transmit radio frequency (RF) waves into the field of view of the radar sensor and generate the radar data based on received reflections of the transmitted RF waves.

A third aspect of the present disclosure relate to a (e.g., computer-implemented) method comprising determining, based on radar data, whether a moving object is present in a field of view, FoV, of a radar sensor. The method further comprises determining, based on the radar data, a range of the moving object if it is determined that the moving object is present in the FoV. Additionally, the method comprises activating a radar target function based on the range of the moving object.

A fourth aspect of the present disclosure relates to a program having a program code for performing the above method when the program may be executed on a processor or a programmable hardware.

### Brief description of the Figures

Some examples of apparatuses and/or methods will be described in the following by way of example only, and with reference to the accompanying figures, in which

Fig. 1 illustrates a block diagram of an example of an apparatus;

Fig. 2 illustrates a pulse transmission scheme of a Binary frequency shift keying (BFSK) radar sensor;

Fig. 3 illustrates an example of a BFSK radar sensor measurement results;

Fig. 4 illustrates a vehicle with a radar sensor mounted below the trunk of the vehicle;

Fig. 5 illustrates an example of a radar system; and

Fig. 6 illustrates an example of a method.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

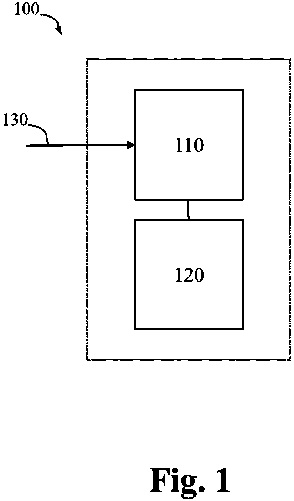

**Fig. 1** illustrates a block diagram of an example of an apparatus 100. The apparatus 100 is to be considered in the context of a radar sensor. For example, the apparatus 100 may be integrated into a radar system comprising the radar sensor, such as explained with reference to Fig. 7, or be external to the radar system. In the first case, the apparatus 100 may be external to or (e.g., partially or fully) integrated into the radar sensor. For instance, the apparatus 100 may be distributed between the radar sensor and a circuitry external to the radar sensor.

The apparatus 100 comprises processing circuitry 120 and optionally comprises interface circuitry 110. In case interface circuitry 110 is present, the interface circuitry 120 may be communicatively coupled (e.g., via a wired or wireless connection) to the processing circuitry 120, e.g., for data exchange between the interface circuitry 110 and the processing circuitry 120.

The interface circuitry 110 may be any device or means for communicating or exchanging data. In case the apparatus 100 comprises the interface circuitry 110, the interface circuitry 110 may be configured to receive data 130 (for example radar data), for example obtained by the radar sensor. For instance, the interface circuitry 110 may be communicatively coupled to the radar sensor or to a storage device storing the data 130. The interface circuitry 110 may receive the data 130, e.g., via a wired or wireless coupling to the radar sensor or the storage device.

Depending on the specific implementation, the apparatus 100 may dispense with the interface circuitry 110: For example, the processing circuitry 120 may determine said data 130. For instance, the processing circuitry 120 may be integrated into the radar sensor. The radar sensor may be configured to emit an RF signal into the FoV of the radar sensor and receive a reflection of the RF signal. The processing circuitry 120 may determine the data 130 (for example radar data), e.g., by sampling the received reflection and perform further processing of the data 130 within the radar sensor. The processing circuitry 120 may optionally modify the sampled signal in a pre-processing step, e.g., for noise-reduction, DC-removal (direct current) or alike. For instance, the apparatus 100 may comprise memory configured to store the determined data 130.

The FoV of a radar sensor is the three-dimensional spatial region where the radar sensor can detect and track targets, encompassing both a horizontal (azimuthal) and a vertical (elevation) direction. Defined by the angular extent of the observable area in both directions and the maximum detectable range, the FoV may be shaped by factors such as antenna design, operating frequency, and beamwidth. In other words, the FoV represents the radar's coverage area in a 3D space.

Alternatively, the processing circuitry 120 may partially determine the data 130. For instance, the processing circuitry 120 may determine a first part of the data 130, whereas at least one external processing circuitry may determine at least one second part of the data 130. The processing circuitry 120 and the external processing circuitry may, e.g., be connected within a distributed computing environment for jointly determining the data 130. In this case, the processing circuitry 120 may either be integrated into the radar sensor or may be external to the radar sensor. The processing circuitry 120 may receive the second part of the data 130, e.g., via an interface to the external processing circuitry such as interface circuitry 110, and further process the first and the second part of the data 130, as described below.

In another alternative, the processing circuitry 120 is partially integrated into the radar sensor and is partially external to the radar sensor. In such cases, the interface circuitry 110 is optional. The processing circuitry 120 may, for instance, comprise a first part (first processing circuitry) which is integrated into the radar sensor and a second part (second processing circuitry) which is external to the radar sensor. In this case, the determination of the data 130 and/or further processing, as described below, may be performed by the first and second part of the processing circuitry 120 in a distributed manner.

The processing circuitry 120 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 120 may optionally be coupled to, e.g., read only memory (ROM) for storing software, random access memory (RAM) and/or non-volatile memory.

The radar sensor may be any device that uses radio waves to, e.g., detect and locate objects. The radar sensor may be an, e.g., BSFK-capable (Binary Frequency Shift Keying-capable) Doppler radar sensor in pulse mode or an FMCW (frequency modulated continuous wave) radar sensor or the like. For instance, the radar sensor may be configured to emit, by a transmitter, an RF signal (Tx signal) into an FoV (which comprises a scene) of the radar sensor and receive, by a receiver, a reflection (echo; Rx signal) of the radar frequency signal. The radar sensor or an external device coupled to the radar sensor may generate radar data 130 based on the received reflection of the RF signal by, e.g., sampling the received reflection by means of an analog-to-digital converter (ADC).

The processing circuitry 120 is configured to determine, based on radar data, whether a moving object is present in the FoV of a radar sensor. The radar sensor emits radio waves into the FoV and objects that are present within the FoV reflect these radio waves, creating echoes that travel back to the radar sensor where they are collected to generate radar data. This radar data contains valuable information about the presence, distance, and characteristics of objects within the radar's FoV. A moving object may introduce changes to the reflected radio waves, often manifesting as a Doppler shift, where the frequency of the returned signal varies depending on the object's speed and direction relative to the radar. This frequency shift allows the radar to determine the presence of a moving object but may also allow to determine its relative speed and direction. For example, techniques such as Pulse-Doppler and Moving Target Indication (MTI) can filter out stationary objects and emphasizing the signals from moving objects and thereby enhancing the radar's ability to detect and track moving targets amidst potential clutter or noise.

A target may refer to any physical entity that changes its position or location over time relative to a reference point. This could include vehicles, people, parts of people such as hands or feet, animals, or any other object that is in motion. The movement can be in any direction - for example horizontally, vertically, or diagonally.

The processing circuitry 120 is further configured to determine, based on the radar data, a range of the moving object if it is determined that the moving object is present in the FoV. The range (that is the distance) of the moving object (also referred to as target) may be determined by analyzing the time it takes for the transmitted radar signal to bounce off the object and return to the radar sensor. The range may, e.g., be calculated based on the speed of the radar signal (which travels at the speed of light) and the time delay between transmission and reception of the signal.

The processing circuitry 120 is further configured to activate (enable) a radar target function based on the range of the moving object. The radar target function is a function configured to control an operation of a device based on the radar data. The device may be an (at least partly) electronically controllable device. The function configured to control an operation of the device may be a function that controls a device in terms of its intended operation. Activating the function configured to control the operation of the device may mean that the function configured to control the operation of the device is made usable for a user or for another component that can access the function configured to control the operation of the device.

The device may, e.g., be car or a part of the car, such as a trunk or a door or a window lifter or the like. The device may in other examples be an electronic consumer device such as a TV or the like or a smart home device such as a light switch or the like. The target function, that is the function that is configured to control an operation of the device, may be a kick controlled trunk opener, or a gesture controlled TV turn on or the like (see also below).

Determining (by the processing circuitry 120), based on radar data, whether a moving object is present in the FoV of a radar sensor may be considered a first function or a first stage. The first function may be carried out by the radar when it is controlled by the processing circuitry to operate in a first operation mode (also referred to as ultra-low power mode or sniffing mode). Determining (by the processing circuitry 120), based on the radar data, a range of the moving object if it is determined that the moving object is present in the FoV may be considered a second function or a second stage. The second function may be carried out by the radar when it is controlled by the processing circuitry 120 to operate in a second operation mode (also referred to as range determination mode or as proximity sensing mode). The first and the second operation mode may be considered sub-modes of a progressive listening mode. The listening mode may be progressive in that sense that in the first operation mode it may be determined whether there is moving object within the FoV at all and then progressively moved on to determine the range of the moving object but only if there is movement within the FoV at all. The radar sensor may be controlled, by the processing circuitry 120 to operate in a first operation mode (the first sub-mode of the progressive listening mode) with lower power consumption than the second operation mode, (the second sub-mode of the progressive listening mode). The accuracy of the radar detection results may be higher in the second sub-mode than in the first sub-mode of the progressive listening mode.

Accuracy of a radar sensor may refer to its ability to correctly determine for example range, velocity, direction of a target or the like with minimal deviation from the true values. It may be important for the radar's effectiveness in detecting, locating, and tracking objects. A false alarm with regards to a radar sensor may occur when the radar sensor erroneously indicates the presence of a target or the like when there is none and/or when the radar sensor falsely activates a target function for example based on a falsely determined detection result. A radar sensor with an increased accuracy may reduce the likelihood of false alarms. High accuracy in radar measurements may reduce the risk of making incorrect decisions based on false alarms.

In the case that it is determined that there is a target within a predetermined range, then the processing circuitry 120 may control the radar sensor to leave the progressive listening mode and move to a third operation mode, a target mode, where the processing circuitry 120 activates the radar target function based on the range of the moving object. The radar sensor may be controlled, by the processing circuitry 120, to operate in the first and second sub-mode of the progressive listening mode with a lower power consumption than the target mode.

That is, there may be two different steps (pre-modes) of checking whether the target function should be activated. Since the target function is only activated in the target mode (and is therefore only able to detect a specific target motion in the target mode), and the target mode is only activated if a target is within a predetermined range, there will be no false alarms triggered by target performing any motion outside of the predetermined range. Therefore, false alarms are reduced. In other words, the progressive listening mode may be considered as an enhanced low-power gateway operation mode, which efficiently shields the target function from being accessed in unnecessary cases. Hence, the proposed technique may enable the use of the radar sensor with regards to a target function in an improved manner. For example, the power consumption of the radar sensor (and/or the radar system or the system that the radar sensor is embedded into) may be minimized and simultaneously the false detection results of the radar sensor may be minimized in the high performance target mode (also referred to as false alarms). In other words, the target function may be carried out with a high accuracy (i.e., a low false detection rate) while the overall power consumption of the radar sensor provided for this target function still may have a minimized power consumption.

The processing circuitry 120 may further be configured to obtain radar data which may be radar data of a frequency shift keying (FSK) Doppler radar sensor. In in other words, the radar sensor may be a FSK Doppler radar sensor. The processing circuitry 120 may determine range and/or velocity of the moving object based on the radar data. An FSK Doppler radar may be a radar that combines FSK modulation with the Doppler effect to detect and analyze the range and velocity/movement of objects. FSK is a modulation technique where the digital information is transmitted through discrete (two frequencies in case of binary frequency shift keying, or multiple frequencies in case of multiple frequency shift keying) changes of a carrier wave. The advantage of an FSK radar may be that it uses a band of frequencies to communicate information, which makes it less susceptible to noise and interference. The Doppler effect, on the other hand, refers to the change in frequency or wavelength of a wave in relation to an observer moving relative to the source of the wave. By combining FSK with the Doppler effect, the radar can not only detect the presence of objects but also determine their range and/or velocity and/or direction of movement. In FSK Doppler radars, the transmitted signal is modulated using FSK, and the reflected signal's frequency shift due to the Doppler effect is analyzed to determine the relative velocity of the detected object.

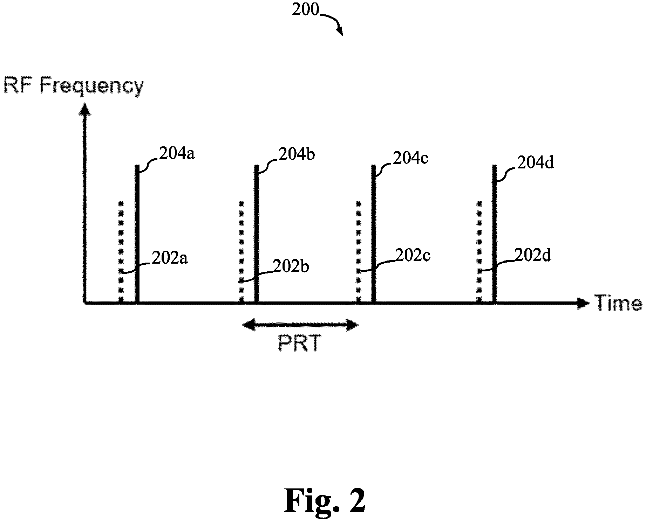

BFSK is a form of FSK, where two frequencies, $f_1$ and $f_2$, may be used to represent the transmitted the digital information (1 and 0) respectively. For example, when a binary 1 is being transmitted, the carrier signal frequency $f_1$, may be used and when a binary 0 is being transmitted, the frequency $f_2$ may be used. A pulse transmission scheme of a BFSK radar sensor is illustrated with regards to **Fig. 2**. Fig. 2 illustrates a pulse transmission scheme of a BFSK radar sensor. The diagram 200 diagram shows the on the x-axis and the frequency on the y-axis. The dashed lines 202a, 202b, 202c, 202d show the emitted pulses with the first RF frequency $f_1$. The solid lines 204a, 204b, 204c, 204d show the emitted pulses with the second RF frequency $f_2$. The first RF frequency $f_1$ is lower than the second RF frequency $f_2$. The pulse repetition time (PRT) is the time interval between two pulses of the same frequency.

The processing circuitry 120 may further be configured to obtain radar data which may be radar data of a binary frequency shift keying Doppler radar sensor in pulse mode. In other words, the radar sensor may be a Doppler radar sensor in pulse mode (also referred to as pulsed Doppler radar sensor, duty-cycled Doppler radar sensor), for instance. That is, the radar sensor may be a Doppler radar sensor (e.g., emitting substantially a single frequency radiation) which is not continuously on, instead it emits short "pulses" when a sample is required to save power. The radar sensor may, thus, be duty-cycled, i.e., have a duty cycle (ratio between pulse duration or pulse width and the period or pulse repetition interval) of less than 1. In such a radar sensor, (short-duration) radar pulses are transmitted, e.g., in bursts or packets. These radar pulses are reflected off objects in the radar's FoV, including stationary and moving targets. The radar sensor then receives the reflected signals (echo) and generates a radar (receive) signal based on the received echo. By analyzing the Doppler shift of the returned signals, it may determine the velocity of targets relative to the radar sensor. The radar system may determine the presence of persons based on a velocity signature in the radar signal, for instance.

The processing circuitry 120 may determine range and/or velocity of the moving object based on the radar data. A BFSK Doppler radar sensor in pulse mode may operate by sending out short bursts of electromagnetic pulses that are modulated with two different carrier frequencies using BFSK. The pulses are directed towards a target object, and once they strike the target, they reflect back towards the radar system. The radar captures this reflected signal and calculates the time difference between the transmission of the pulse and the reception of the echo to measure the distance to the object using the speed of light formula. As the object moves, its velocity results in a frequency shift of the returned echo due to the Doppler effect.

The three different functions carried out by the processing circuitry 120 in each of the above described three different operation modes are explained in more detail now:

For example, the processing circuitry 120 determining, based on radar data, whether a moving object is present in the FoV of the radar sensor may comprise a motion detection (for example in an ultra-low power mode, see below). This may for example comprise performing a peak-to-peak detection with regards to the I and Q-components of the radar data, like:

$$\max(I) - \min(I) + \max(Q) - \min(Q) = motion\_value \quad \text{(Equation 1)}$$

That **motion_value** in equation 1 may for example illustrate a measure of the total variation or spread of the values within both the I and Q components and when the **motion_value** exceeds a predefined threshold value, a motion within the FoV may likely be detected. In this case a Discrete Fourier Transform (DFT) may be performed and if the determined peak amplitude exceeds another threshold value a motion within the FoV may be confirmed. The DFT may be implemented optimized as a Fast Fourier Transform (FFT) in case that of $2^X$ samples are available. In case that the FFT is performed on Doppler data it is also referred to as Doppler FFT (see below). If a motion or a moving objection is detected in the FoV, the processing circuitry 120 may move to the second function carried out in the second operation mode.

Further, the processing circuitry 120 may be further configured to perform an interference mitigation (to mitigate the effects of other radar sensors operating in the vicinity) when determining whether a moving object is present in the FoV (that is in the first operation mode and/or in any other operation mode). Interference mitigation in radar sensor and radar data processing may involve different of techniques to minimize or eliminate the effects of interference on radar performance. These techniques may include pulse shifting; outlier detection; spatial filtering, which uses antenna arrays to focus the radar beam in a specific direction and reject signals from other directions; frequency management, where radars operate on different frequencies or dynamically change frequencies to avoid interference from other systems; time management, which involves synchronizing the operation of multiple radar systems or using staggered or random pulse repetition times to reduce mutual interference; polarization filtering, where radars use different polarizations for transmission and reception to filter out interference that does not match the desired polarization; adaptive signal processing, which employs advanced signal processing techniques such as adaptive filtering to identify and remove interference from received signals; anti-jamming techniques, such as frequency hopping, beam steering, and jamming signal cancellation, to counter intentional jamming attempts or other techniques.

For example, the processing circuitry 120 determining, based on the radar data, a range of the moving object if it is determined that the moving object is present in the FoV may comprise the sampling of raw data from a two pulse BFSK radar (due to two different radio frequencies in a BFSK radar sensor), wherein the raw data for the two pulses may be comprised in the radar data. The BFSK radar may be a Doppler radar operating at two different RF frequencies $f_1$ and fz. When a radar system transmits a signal towards a moving target, the returned echo signal will have a shift in frequency, a Doppler frequency shift $f_D$, due to the Doppler effect. The obtained radar data may be processed individually for both RF frequencies $f_1$ and $f_2$. The Doppler frequency shift $f_D$ of a target may approximately be the same for both RF frequencies (because the RF frequency difference is very small compared to the absolute RF frequencies e.g., 15 MHz compared to 24 GHz, and the Doppler frequency shift is small, compared to the Doppler FFT resolution, that both frequencies may fall into the same Doppler FFT bin), which may be determined as

$$f_D = \frac{2 f_{RF} v_T \cos(\alpha_T)}{c_0} \quad \text{(Equation 2)}$$

where $v_T$ is the velocity of the moving target, $c_0$ is the speed of light, and $\alpha_T$ is the angle of arrival.

The processing circuitry 120 may be further configured to perform, based on the radar data, a Doppler FFT for each shifted frequency transmitted by the FSK or BFSK Doppler radar. In case of the BFSK the processing circuitry 120 may determine two Doppler FFTs, in case of an FSK with **n** frequencies **n** Doppler FFTs may be determined. A (or each) Doppler FFT may be used to detect the velocity of a moving object. When the Doppler FFT is applied to the received signal, it transforms the time-domain signal into the frequency domain, to identify the Doppler shift. The Doppler FFT output may contain magnitude and phase information over the Doppler frequency spectrum. The frequency spectrum may be divided into discrete intervals or "Doppler bins". Each bin may correspond to a specific Doppler frequency shift, which corresponds to a specific target velocity. The magnitude is evaluated in the different Doppler bins by peak search to determine the Doppler bin containing the Doppler shift caused by target motion, which can then be converted into the target velocity. Further, two (or a plurality of) Doppler FFTs may be used to determine the target range of a moving object. For the two Doppler FFTs in a BFSK system, the peaks in both Doppler magnitude spectra may be in the same Doppler bin, which may be referred to as target Doppler bin. The phase information in target Doppler bin is different, and this phase difference $\Delta\varphi_T$ in the target Doppler bin between the two Doppler FFTs can be used to calculate the range of the moving target. The phase difference $\Delta\varphi_T$ in the target Doppler bin between the two Doppler FFTs may be dependent on the target distance (in case of multiple transmitted frequencies and corresponding multiple Doppler FFTs for example an average difference between every two frequencies may be determined or in another example all Doppler FFT values are utilized). Therefore, the processing circuitry 120 may be further configured to determine the phase difference value $\Delta\varphi_T$ in the target Doppler bin between the two Doppler FFTs (based on the output of the Doppler FFTs).

The processing circuitry 120 may be further configured to determine the range of the object R based on the Doppler phase difference value $\Delta\varphi_T$ as follows:

$$R = \frac{\Delta\varphi_T}{2\pi} R_U \quad \text{(Equation 3)}$$

where $R_U$ is the unambiguity range of the radar sensor which may be determined as

$$R_U = \frac{c_0}{2\Delta f_{RF}} \quad \text{(Equation 4)}$$

where $\Delta f_{RF}$ is a difference between the transmitted RF frequencies $f_1$ and $f_2$ (also referred to as RF bandwidth). (In case of multiple transmitted frequencies, for example an average difference between every two frequencies may be used.). For example, for an assumed target distance of $R = 0$ m, both target Doppler frequencies have the same phase 0 which yields a Doppler phase difference value $\Delta\varphi_T = 0$. Further, for increasing target distance $R$, the Doppler phase difference value $\Delta\varphi_T$ may increase until the unambiguity range $R_U$ may be reached. For example, if the difference between the transmitted RF frequencies equals, $\Delta f_{RF} = 10$ MHz, the unambiguity range equals $R_U = 15$ m. For example, the unambiguity range may be increased by using more than two RF frequencies.

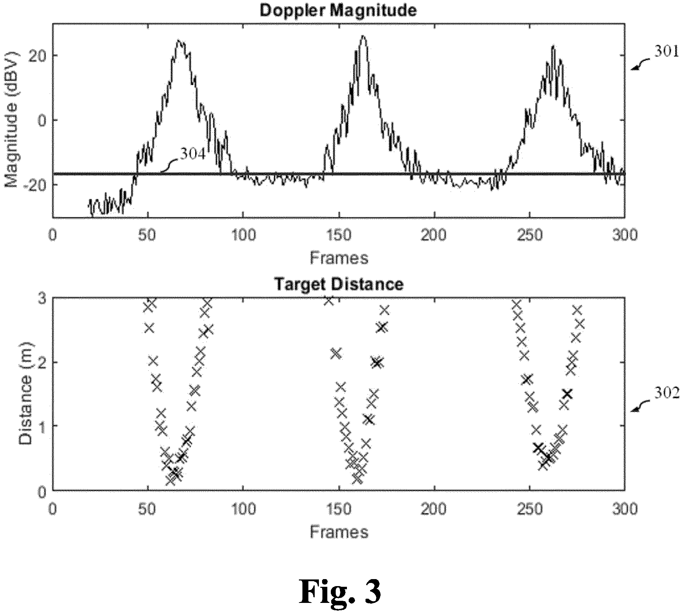

For example, BFSK radar sensor measurement results are illustrated in **Fig. 3**. Fig. 3 illustrates an example of BFSK measurement results. The BFSK radar sensor which generated the measurement results may have the following settings: Samples per frame (per frequency): 128; PRT: 1 ms; Frame time: 250 ms; TX power level: 63; Antenna Baseband Beamforming (ABB) gain index: 7; Pulse duration: 1 $\mu$s; RF bandwidth: 15 MHz; Unambiguity range: $R_U = 10$ m. The upper diagram 301 in Fig. 3 shows the frame number on the x-axis and the measured magnitude of the Doppler radar sensor in dBV on the y-axis. The magnitude measured by the radar sensor ranges between -20 dBV - 20 dBV. The lower diagram 302 in Fig. 3 shows the frame number on the x-axis and the measured target distance on the y-axis. The measured distance of the target is illustrated by a cross. When the target is farer away than 3 m the measured magnitude falls below the measurement threshold 304, which may be around -15 dBV.

If an angle of arrival (AoA) is available, it may be utilized to determine the range of the moving object as well. The range determination of the moving target may be determined on a per frame basis. For example, optionally a filter/smoothing and/or tracking of the target data may be applied.

For example, a radar sensor in pulse mode, that is a radar sensor with a pulsed duty-cycle, may be more energy-efficient than a continuous-wave radar sensor. Operating the radar in different (sub)-modes may be easier to implement with a radar sensor in pulse mode than with continuous-wave radar sensor.

For example, the radar target function may include a gesture recognition based on the radar data. Gesture recognition may refer to the capability of a radar system to identify and interpret gestures, for example human gestures, such as hand and/or finger movements or feet movement or body motions or the like, by analyzing the changes in the radar signals reflected off the human body. The processing circuitry 120 in this regard may be configured to activate the radar target function, that is the gesture recognition, based on the range of the moving object, wherein the gesture recognition functions may be configured to control an operation of a device based on the radar data. For example, the device may be a car or a part of the car, such as a trunk or a door or a window lifter or the like. The device may be an electronic consumer device such as a (smart) TV or a smart home device such as a light switch or a (smart) coffee machine or the like. The operation of the device that is controlled by the activated gesture recognition (i.e., the target function) may then be: turn on/off the device, open/close the device/parts of the device or the like. That is, the gesture recognition, turns on/off the device, opens/closes the device/parts of the device or the like, after correctly recognizing a predefined gesture.

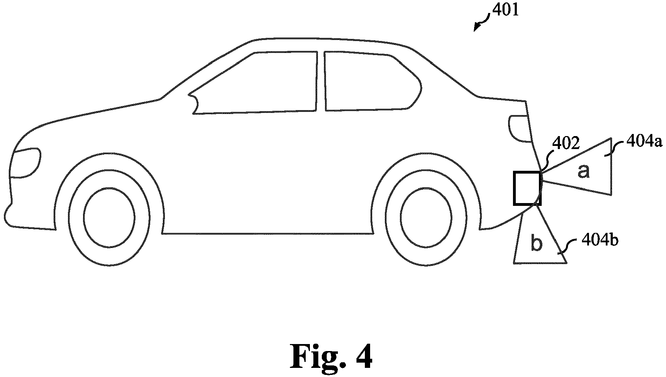

For example, the radar target function may be a gesture recognition function configured for opening or closing a trunk of a vehicle. The operation of the trunk that is controlled by the activated gesture recognition (i.e., the target function) may then be to open/close the trunk of the vehicle. That is, the gesture recognition opens/closes the trunk after correctly recognizing a predefined gesture. The recognizing of a predefined gesture may be a gesture involving the foot of the user such as a kick at the rear of the car which opens the trunk (this may also be referred to as smart trunk opener/closer). In this example it is also desirable to have a very low power consumption and avoidance of false alarms (i.e., avoiding opening the trunk due to a false radar sensor detection result). For example, a setup as described with regards to **Fig. 4** may be used. Fig. 4 illustrates a vehicle 401 with a radar sensor 402 mounted below the trunk of the vehicle. The radar sensor 402 may have two or more pairs of antennas, 402a and 402b. The first pair of antennas comprises one transmitter antenna and one receiver antenna. The second pair of antennas comprises a transmitter antenna and a receiver antenna. The first pair of antennas 402a may have an FoV 404a which has its main axis parallel to the ground and a second pair of antennas 402b may have an FoV 404b which has its main axis orthogonal to the main axis of the first pair of antennas 402a and orthogonal to the ground. For example, the second part of antennas 402b may be turned on only in the third operation mode when the target function (gesture recognition to recognize a foot kick to open the trunk) is activated but not in first and/or second operation mode.

The first, the second and the third operation mode of the radar sensor 402 may be in this example as follows: In first operation mode (also referred to as an ultra-low power mode), the processing circuitry 120 may determine if anything is moving (such as a moving object) in the radar's FoV. As a frame time of the radar sensor 402 for example 500 ms or the like may be used, and a small number of samples, for example 8, may be used. For example, advanced signal processing routines may be used to support interference mitigation to prevent the system changing to second mode (for example in case that a second radar sensor operating at the same frequency is close-by). For example, (on-chip) routines such as pulse shifting and outlier detection can be used. When final output in this operation mode may be "motion detected", the processing circuitry 120 may change to the second mode. A BSFK-capable Doppler radar sensor in pulse mode may be well suited for the smart trunk opener/closer application. However, in another example a Frequency Modulated Continuous Wave (FMCW) radar or amplitude-based Doppler data evaluation for range estimation may be used.

In the second operation mode (also referred to as BFSK-based ranging mode) the processing circuitry 120 may determine the distance of a moving object. In the second operation mode a two pulse configuration may be used for the radar senor 402 to enable second operation mode. For example, two different frequencies are transmitted and received alternately (see Fig. 2). The second operation mode (intermediate step) may have a medium power consumption, for example based on a 300ms frame time and 32 samples per frame, and a two pulse configuration to enable BFSK-based range estimation. In the second operation mode the processing circuitry 120 detects and tracks an approaching human target and may only switch to the third operation mode, the target function (that is the real kick detection mode), when the human target is within a certain predetermined range to the radar sensor (e.g., <1 m). For example, the radar sensor 402 may further support angle of arrival (AoA) estimation, and therefore an activation zone can be pre-determined. This may further save power and avoids falsely detected kicks.

In the third operation mode (also referred to as the kick detection mode), the processing circuitry 120 may activate the kick detection based on the radar data. In this mode, for an accurate kick detection a high performance mode may be required, for example a 40 ms frame time, 32 samples per frame and a two pulse configuration to enable two antenna pairs (see Figs. 4a and 4b). The signature of the received radar signals of the antenna pairs (two antenna or more antenna pairs may be used) are evaluated. This may be done with machine learning-based signal processing or other established signal processing techniques. When a valid kick is detected in this third operation mode with the activated target function, the trunk is opened or closed, dependent on its current state.

Hence the proposed technique uses the three different operating modes to minimize the system power consumption and simultaneously also to minimize any falsely detected kicks. In other words, a low power and false alarm-reduced kick detection in the smart trunk opener may be enabled by the described three-modes/three-stages-based technique each been operated with a different operation mode (power mode), and one mode (for example the second operation mode) or more modes using BFSK-based range estimation.

For example, the kick detection or gesture recognition or any other target functions may be carried out utilizing conventional signal processing or machine-learning based.

As described above, the processing circuitry 120 may be configured to control the radar sensor to operate in a first operation mode (also referred to as first sub-mode of the listening mode) while the processing circuitry 120 determines whether a moving object is present in the FoV. Further, the processing circuitry 120 may control the radar sensor to operate in a second operation mode (also referred to as first sub-mode of the listening mode) while the processing circuitry determines the range of the moving object. As described above the first and the second operation mode may be considered a first and a second sub-mode of a progressive listening mode. Further, the processing unit 120 may control the radar sensor to operate in a third operation mode (also referred to as the targe mode) while the radar target function is activated.

The processing circuitry 120 may be further configured to control the radar sensor to use at least one of a shorter frame duration, a lower number of samples per frame, a lower output power, a lower conversion gain and a sensor on-time in the first operation mode compared to the second operation mode. Further, for example, the processing circuitry 120 may be configured to control the radar sensor to use at least one of a shorter frame duration, a lower number of samples per frame, a lower output power and a lower conversion gain and a sensor on-time in the second operation mode compared to the third operation mode.

The frame duration may be the time span of each radar signal frame. A radar signal frame may be aa set of consecutive radar pulses transmitted and received within a defined time interval, used for collecting and processing data about detected objects. The frame duration may directly affect the radar's update rate and influence the amount of data that can be collected in each frame. A longer frame duration may allow for more samples per frame, which may enhance resolution and accuracy. However, it may result in increased on-time of the sensor, and higher power consumption.

The frame rate of a radar sensor may be the frequency at which consecutive radar signal frames are transmitted or processed, typically measured in frames per second (fps). It may inversely relate to frame duration, as a shorter frame duration allows for a higher frame rate, and vice versa. Higher frame rates may lead to shorter frame durations, which may reduce the on-time of the sensor and decrease power consumption. A shorter frame duration may also lead to fewer samples per frame and potentially lower resolution and accuracy.

Further, the number of samples per frame may refer to the count of individual data points acquired from the radar's continuous analog signal within a single frame during the analog-to-digital (A/D) conversion process. This process, known as "sampling", may transform the continuous waveform into discrete digital values, enabling further processing and analysis. A higher number of samples per frame may result in a more accurate digital representation of the analog radar signal, enhancing the radar's precision and detection capabilities. Increasing the number of samples may enhance resolution and accuracy. However, a higher number of samples per frame may result in a higher power consumption of the radar sensor due to increased processing requirements, a higher sampling rate, extended on-time of the sensor, increased data transmission and/or a longer frame duration.

The output power may refer to the amount of energy emitted by the radar per pulse, which may influence the radar's detection range, sensitivity, and potential for interference with other systems. Higher output power may improve the detection range and sensitivity of the radar sensor, enhancing accuracy. However, it may also result in higher power consumption during the on-time of the sensor.

The conversion gain may refer to the amplification factor applied to the radar's received signal during signal processing, affecting the radar's sensitivity to weak signals and overall accuracy. Higher conversion gain may increase sensitivity to weak signals, enhancing accuracy. However, high gain may also increase power consumption (for example when the radar is operating with high output power).

For example, on-time of the radar sensor may refer to the time during which the radar is actively transmitting and/or receiving signals. Longer on-time may improve the radar's detection capabilities but also increase power consumption. On-time may be influenced by the frame duration, as longer frames typically require the radar to be active for more extended periods. It may also be affected by the output power and conversion gain, as adjusting these parameters may require the radar to be active for longer durations to achieve the desired performance.

Therefore, for example when the processing circuitry 120 controls the radar sensor to use at least one of a shorter frame duration, a lower number of samples per frame, a lower output power, a lower conversion gain and a sensor on-time in the first operation mode compared to the second operation mode, in the first operation mode, a power consumption of the radar sensor may be lower than in the second operation mode. Correspondingly the accuracy of the radar sensor may be lower in the first operation mode than in the second operation mode. The same may be true with regards to the second and the third operation mode: When the processing circuitry 120 controls the radar sensor to use at least one of a shorter frame duration, a lower number of samples per frame, a lower output power, a lower conversion gain and a sensor on-time in the second operation mode compared to the third operation mode, in the second operation mode, a power consumption of the radar sensor may be lower than in the third operation mode. Correspondingly the accuracy of the radar sensor may be lower in the second operation mode than in the third operation mode. Due to logical transitivity the same may be true with regards to the first and third operation mode.

When the radar sensor is controlled, by the processing circuitry 120, to operate in the first operation mode (that is the first sub-mode of the progressive listening mode), and/or the second operation mode (that is the second sub-mode of the progressive listening mode) the power consumption may be lower than in the third operation mode (that is the target mode).

The processing circuitry 120 determines to leave the progressive two-stage listening mode and to access the target function in the target mode (that is the third operation mode) only if a target is within the predetermined range. Therefore, there will be no false alarms triggered by target performing any motion outside of the predetermined range and therefore the overall system accuracy is increased because false alarms triggered by a target (i.e., falsely activating the target function) are minimized.

Hence, with the proposed technique power consumption of the radar sensor (and/or the radar system or the system that the radar sensor is embedded into) may be minimized and simultaneously the false detection results of the radar sensor may be minimized, that is falsely activating the target function may be minimized.

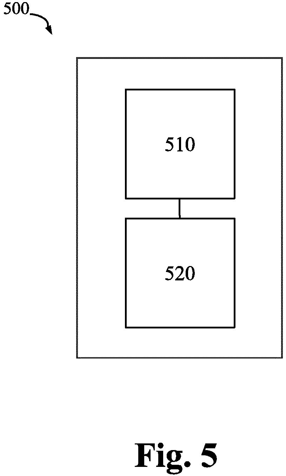

**Fig. 5** illustrates an example of a radar system 500 comprising an apparatus 510 as described herein, such as apparatus 100, and the radar sensor 520, such as described with reference to the previous figures. The radar sensor 520 is configured to emit an RF signal into the field of view and generate the radar data based on received reflections of the transmitted RF waves.

Although the apparatus 510 and the radar sensor 520 are depicted as separate blocks in Fig. 5, in other examples, the apparatus 510 may in part or in entirety be included in the radar sensor 520, which thus correspondingly includes all or part of the processing circuitry (e.g., processing circuitry 120) of the apparatus 510.

In case the apparatus 510 is only partially included in the radar sensor 520, the radar system 700 may include distributed processing circuitry carrying out respective parts of the processing steps, e.g., in the form of first processing (sub-)circuitry included in the radar sensor 520, and second processing (sub-)circuitry external to the sensor and in communication with the first processing circuitry through interface circuitry (e.g., interface circuitry 110), for instance, for exchange of data between the first and the second processing circuitry.

In case the apparatus 510 is integrated in the radar sensor 520, the processing circuitry and the radar sensor 520 may be jointly integrated in a single semiconductor chip, or in more than one semi-conductor chip.

In case the apparatus 710 is not included in the radar sensor 520, the processing circuitry may take the form of circuitry external to the radar sensor 520 and may be communicatively coupled therewith through interface circuitry.

More details and aspects of the radar system 500 are explained in connection with the proposed technique or one or more examples described above, e.g., with reference to Fig. 1. The system 700 may comprise one or more additional optional features corresponding to one or more aspects of the proposed technique, or one or more examples described above.

The radar system 500 may comprise a radar sensor 520 which may be a frequency shift keying, FSK, Doppler radar sensor, and/or wherein the radar sensor is a binary frequency shift keying, BFSK, Doppler radar sensor in pulse mode.

For example, the radar system 500 may comprise an apparatus 510 comprising processing circuitry further configured to control the radar sensor 520 to operate in a first operation mode while the processing circuitry determines whether a moving object is present in the FoV. The apparatus 510 may comprise processing circuitry further configured to control the radar sensor to operate in a second operation mode while the processing circuitry determines the range of the moving object. The apparatus 510 may comprise processing circuitry to control the radar sensor to operate in a third operation mode while the radar target function is activated, wherein in the first operation mode a power consumption of the radar sensor is lower than in the second operation mode, and in the second operation mode a power consumption of the radar sensor is lower than in the third operation mode.

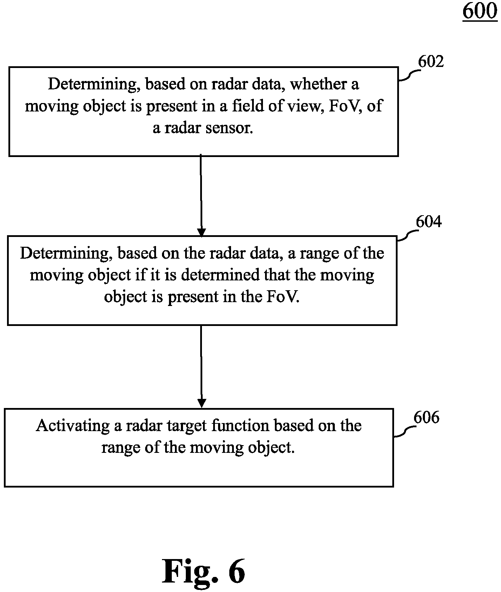

**Fig. 6** illustrates a flowchart of an example of a (e.g., computer-implemented) method 600. The method 600 may be performed by an apparatus described herein, such as apparatus 100. The method 600 comprises determining 602, based on radar data, whether a moving object is present in a field of view, FoV, of a radar sensor. The method 600 further comprises determining 804, based on the radar data, a range of the moving object if it is determined that the moving object is present in the FoV. The method 600 further comprises activating 606 a radar target function based on the range of the moving object.

More details and aspects of the method 600 are explained in connection with the proposed technique or one or more examples described above, e.g., with reference to Fig. 1. The method 600 may comprise one or more additional optional features corresponding to one or more aspects of the proposed technique, or one or more examples described above.

In the following, some examples of the proposed concept are presented:

An example (e.g., example 1) relates to an apparatus comprising processing circuitry configured to determine, based on radar data, whether a moving object is present in a field of view, FoV, of a radar sensor, determine, based on the radar data, a range of the moving object if it is determined that the moving object is present in the FoV, and activate a radar target function based on the range of the moving object, wherein the radar target function is a function configured to control an operation of a device based on the radar data.

Another example (e.g., example 2) relates to a previous example (e.g., example 1) or to any other example, further comprising that the processing circuitry is further configured to activate the radar target function if the determined range of the moving object is within a predetermined range.

Another example (e.g., example 3) relates to a previous example (e.g., one of the examples 1 or 2) or to any other example, further comprising that the radar data is radar data of a frequency shift keying, FSK, Doppler radar sensor.

Another example (e.g., example 4) relates to a previous example (e.g., one of the examples 1 to 3) or to any other example, further comprising that the radar data is radar data of a binary frequency shift keying, BFSK, Doppler radar sensor in pulse mode.

Another example (e.g., example 5) relates to a previous example (e.g., one of the examples 3 or 4) or to any other example, further comprising that the processing circuitry is further configured to perform, based on the radar data, a Discrete Fourier Transform for each shifted frequency transmitted by the FSK or BFSK Doppler radar, determine a Doppler phase difference value based on the output of the Doppler FTTs, and determine the range of the object based on the Doppler phase difference value.

Another example (e.g., example 6) relates to a previous example (e.g., one of the examples 1 to 5) or to any other example, further comprising that the processing circuitry is further configured to control the radar sensor to operate in a first operation mode while the processing circuitry determines whether a moving object is present in the FoV, control the radar sensor to operate in a second operation mode while the processing circuitry determines the range of the moving object, and control the radar sensor to operate in a third operation mode while the radar target function is activated.

Another example (e.g., example 7) relates to a previous example (e.g., example 6) or to any other example, further comprising that the processing circuitry is further configured to control the radar sensor to use at least one of a shorter frame duration, a lower number of samples per frame, a lower output power and a lower conversion gain in the first operation mode compared to the second operation mode.

Another example (e.g., example 8) relates to a previous example (e.g., one of the examples 1 to 7) or to any other example, further comprising that the processing circuitry is further configured to perform interference mitigation when determining whether a moving object is present in the FoV.

Another example (e.g., example 9) relates to a previous example (e.g., one of the examples 1 to 8) or to any other example, further comprising that the radar target function includes gesture recognition based on the radar data.

Another example (e.g., example 10) relates to a previous example (e.g., one of the examples 1 to 9) or to any other example, further comprising that the radar target function is a gesture recognition function configured for opening a trunk of a vehicle.

An example (e.g., example 11) relates to a radar system, comprising an apparatus according to any one of examples 1 to 10, and a radar sensor, wherein the radar sensor is configured to transmit RF waves into the field of view of the radar sensor, and generate the radar data based on received reflections of the transmitted RF waves.

Another example (e.g., example 12) relates to a previous example (e.g., example 11) or to any other example, further comprising that the radar sensor is a frequency shift keying, FSK, Doppler radar sensor, and/or wherein the radar sensor is a binary frequency shift keying, BFSK, Doppler radar sensor in pulse mode .

Another example (e.g., example 13) relates to a previous example (e.g., example 11) or to any other example, further comprising that the apparatus comprising circuitry is further configured to control the radar sensor to operate in a first operation mode while the processing circuitry determines whether a moving obj ect is present in the FoV, control the radar sensor to operate in a second operation mode while the processing circuitry determines the range of the moving object, and control the radar sensor to operate in a third operation mode while the radar target function is activated, wherein in the first operation mode a power consumption of the radar sensor is lower than in the second operation mode, and in the second operation mode a power consumption of the radar sensor is lower than in the third operation mode.

An example (e.g., example 14) relates to a method comprising Determining, based on radar data, whether a moving object is present in a field of view, FoV, of a radar sensor, Determining, based on the radar data, a range of the moving object if it is determined that the moving object is present in the FoV, and Activating a radar target function based on the range of the moving object.

Another example (e.g., example 15) relates to a program having a program code for performing the method of example 14, when the program is executed on a processor or a programmable hardware.

Another example (e.g., example 15) relates a non-transitory machine-readable medium having stored thereon a program having a program code for performing the method of example 14, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. An apparatus (100) comprising processing circuitry (120) configured to:

   determine, based on radar data, whether a moving object is present in a field of view, FoV, of a radar sensor;
   determine, based on the radar data, a range of the moving object if it is determined that the moving object is present in the FoV; and
   activate a radar target function based on the range of the moving object, wherein the radar target function is a function configured to control an operation of a device based on the radar data.

2. The apparatus (100) of claim 1, wherein the processing circuitry (120) is further configured to activate the radar target function if the determined range of the moving object is within a predetermined range.

3. The apparatus (100) of claim 1 or claim 2, wherein the radar data is radar data of a frequency shift keying, FSK, Doppler radar sensor.

4. The apparatus (100) of any one of claims 1 to 3, wherein the radar data is radar data of a binary frequency shift keying, BFSK, Doppler radar sensor in pulse mode.

5. The apparatus (100) of claim 3 or claim 4, wherein the processing circuitry (120) is further configured to:

   perform, based on the radar data, a Discrete Fourier Transform, DFT, for each shifted frequency transmitted by the FSK or BFSK Doppler radar;
   determine a Doppler phase difference value based on an output of the DFT; and
   determine the range of the object based on the Doppler phase difference value.

6. The apparatus (100) of any one of claims 1 to 5, wherein the processing circuitry (120) is further configured to:

   control the radar sensor to operate in a first operation mode while the processing circuitry (120) determines whether a moving object is present in the FoV;
   control the radar sensor to operate in a second operation mode while the processing circuitry (120) determines the range of the moving object; and
   control the radar sensor to operate in a third operation mode while the radar target function is activated.

7. The apparatus (100) of claim 6, wherein the processing circuitry (120) is further configured to control the radar sensor to use at least one of a shorter frame duration, a lower number of samples per frame, a lower output power and a lower conversion gain in the first operation mode compared to the second operation mode.

8. The apparatus (100) of any one of claims 1 to 7, wherein the processing circuitry (120) is further configured to perform interference mitigation when determining whether a moving object is present in the FoV.

9. The apparatus (100) of any one of claims 1 to 8, wherein the radar target function includes gesture recognition based on the radar data.

10. The apparatus (100) of any one of claims 1 to 9, wherein the radar target function is a gesture recognition function configured for opening a trunk of a vehicle.

**11.** A radar system (500), comprising:

an apparatus (510) according to any one of claims 1 to 10; and
a radar sensor (520), wherein the radar sensor is configured to:

transmit radio frequency waves into the field of view of the radar sensor; and
generate the radar data based on received reflections of the transmitted radio frequency waves.

**12.** The radar system (500) of claim 11, wherein the radar sensor (520) is a frequency shift keying, FSK, Doppler radar sensor, and/or wherein the radar sensor is a binary frequency shift keying, BFSK, Doppler radar sensor in pulse mode.

**13.** The radar system (500) of claim 11, wherein the apparatus (510) comprising circuitry is further configured to:

control the radar sensor (520) to operate in a first operation mode while the processing circuitry determines whether a moving object is present in the FoV;
control the radar sensor (520) to operate in a second operation mode while the processing circuitry determines the range of the moving object; and
control the radar sensor (520) to operate in a third operation mode while the radar target function is activated, wherein in the first operation mode a power consumption of the radar sensor is lower than in the second operation mode, and in the second operation mode a power consumption of the radar sensor is lower than in the third operation mode.

**14.** A method (600) comprising:

determining (602), based on radar data, whether a moving object is present in a field of view, FoV, of a radar sensor;
determining (604), based on the radar data, a range of the moving object if it is determined that the moving object is present in the FoV; and
activating (606) a radar target function based on the range of the moving object.

**15.** A program having a program code for performing the method of claim 14, when the program is executed on a processor or a programmable hardware.

**Fig. 1**

**Fig. 2**

Fig. 3

**Fig. 4**

500

510

520

**Fig. 5**

<u>600</u>

602

Determining, based on radar data, whether a
moving object is present in a field of view, FoV, of
a radar sensor.

604

Determining, based on the radar data, a range of the
moving object if it is determined that the moving
object is present in the FoV.

606

Activating a radar target function based on the
range of the moving object.

# Fig. 6

**Europäisches Patentamt**
**European Patent Office**
**Office européen des brevets**

# EUROPEAN SEARCH REPORT

Application Number

EP 23 19 9947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 703 583 B1 (SKEOCH JAMES STEVEN [US] ET AL) 18 July 2023 (2023-07-18) * column 2, lines 6-13; figures 1-3; tables 1-4 * * column 6, lines 47-62 * * column 12, lines 24-26 * ----- | 1-15 | INV. G01S7/41 G01S13/28 G01S13/42 G01S13/56 G01S13/58 |
| A | US 2022/163655 A1 (SAUER PETER [DE]) 26 May 2022 (2022-05-26) * paragraphs [0034], [0051] * ----- | 3-5,9, 10,12 | ADD. G01S7/28 G01S13/34 G01S13/931 |

TECHNICAL FIELDS
SEARCHED (IPC)

G01S

The present search report has been drawn up for all claims

| Place of search | Date of completion of the search | Examiner |
|---|---|---|
| Munich | 5 March 2024 | Ferrara, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 19 9947**

This annex lists the patent family members relating to the patent documents cited in  the above-mentioned European search report.
The members are as contained in the European Patent Office EDP file on
The European Patent Office is in no way liable for these particulars which are merely given for the purpose of information.

**05-03-2024**

| Patent document cited in search report | | Publication date | Patent family member(s) | | Publication date |
|---|---|---|---|---|---|
| US 11703583 | B1 | 18-07-2023 | NONE | | |
| US 2022163655 | A1 | 26-05-2022 | CN | 116472472 A | 21-07-2023 |
| | | | DE | 112021006124 T5 | 28-09-2023 |
| | | | JP | 2023550160 A | 30-11-2023 |
| | | | KR | 20230088473 A | 19-06-2023 |
| | | | US | 2022163655 A1 | 26-05-2022 |
| | | | WO | 2022115862 A1 | 02-06-2022 |

EPO FORM P0459

For more details about this annex : see Official Journal of the European Patent Office, No. 12/82